# EUROPEAN PATENT APPLICATION

(11) **EP 3 070 151 A1**
(43) Date of publication of application: **21.09.2016**
(21) Application number: 15159683.0
(22) Date of filing: 18.03.2015
(51) Int. Cl.: C10L 1/02

(54) **A method for controlled aging of fast pyrolysis bio-oil, aged fast pyrolysis bio-oil and a plant**

(71) Applicant: Fortum OYJ, 02150 Espoo (FI); Valmet Technologies Oy, 02150 Espoo (FI)
(72) Inventor: Autio, Joakim, 36270 Kangasala (FR); Heinonen, Olli, 02620 Espoo (FI); Heiskanen, Jukka, 02660 Espoo (FI); Hilli, Tuomo, 33900 Tampere (FI); Kokko, Lauri, 33710 Tampere (FI); Kärki, Sara, 00570 Helsinki (FI); Saari, Pia, 02650 Espoo (FI)
(74) Representative: Papula Oy

(57) **Abstract**

The disclosure relates to a method for controlled aging of fast pyrolysis bio-oil. The method is characterized in that it comprises modulation of the aging reactions of the fast pyrolysis bio-oil for retaining the usability of the fast pyrolysis bio-oil. This is achieved by subjecting the fast pyrolysis bio-oil to temperature regulation and/or to a catalytic treatment for producing aged fast pyrolysis bio-oil. The disclosure further relates to aged fast pyrolysis bio-oil obtainable by the said method and to a plant for producing said fast pyrolysis bio-oil.

## Description

### TECHNICAL FIELD

The current disclosure relates to a method for controlled aging of fast pyrolysis bio-oil, to aged fast pyrolysis bio-oil and to a plant for producing aged fast pyrolysis bio-oil.

### BACKGROUND

Biofuels are currently developed as potential substitutes for fossil fuels in the production of heat and electricity, as well as in combustion engines. One type of biofuel is fast pyrolysis bio-oil (FPBO), which can be produced from many types of organic material, typically from forestry residue and by-products of pulp and paper industry. FPBO has a number of benefits compared to fossil fuels, especially relating to environmental aspects. The raw material can be obtained locally and it is renewable, the carbon dioxide emissions in heat production are lowered and the wood-based bio-oil contains only minimal quantities of sulfur.

Fast pyrolysis bio-oils are produced through heating organic material in an oxygen-free environment. The carbonaceous char is separated as a solid component in the pyrolysis reactor, whereas the gaseous pyrolysis products are lead to a condenser to yield organic liquid (i.e. the FPBO) and non-condensable gases.

FPBOs differ quite significantly from conventional fossil oils in their physical and chemical properties. Fast pyrolysis bio-oils have a higher density and contain more suspended solids. They contain more water and are acidic. Further, they are polar and their oxygen content is higher than in fossil oils. The composition of FPBOs varies depending on the organic material used as the feedstock, but generally they contain hundreds, if not thousands, of thermal degradation products of lignocelluloses. FPBOs are always complex mixtures of organic molecules of variable size containing a number of functional groups, including carboxyl and carbonyl (ketone and aldehyde) groups.

FPBOs undergo numerous spontaneous reactions after they are produced, i.e. after the organic liquid is condensed. The reactions taking place after the condensing and during the storage of the FPBOs are termed aging reactions and they generally decrease the quality of the FPBO. Due to the complex composition of the FPBOs, the analysis and control of these reactions is difficult. However, a number of different methods has been developed to limit the occurrence of the aging reactions and to preserve the FPBO quality. Additives can be used to limit the aging reactions or to scavenge the reactive functional groups.

For example, in the patent document CN103254948, a method for improving the stability of bio-oil is disclosed. In the method, an additive consisting of octanol and a micro-molecular alcohol, selected from the group of methanol, ethanol, propyl alcohol and butyl alcohol, is mixed with the bio-oil. In the patent document EP2774970 (A1), a process for converting bio-oil is disclosed. The process comprises the steps, where feedstock comprising bio-oil is subjected to oxidation in the presence of an oxidant, under conditions suitable for enacting said oxidation to yield an oxidation product and subjecting said oxidation product to condensation in the presence of a basic catalyst to obtain converted bio-oil. Further, in the patent document US 8603199 B2, a method and a device to produce esterified, olefinated/esterified, or thermochemolytic reacted bio-oils as fuels are disclosed. The bio-oil esterification reaction is catalyzed by addition of alcohol and acid catalyst. The olefination/esterification reaction is catalyzed by addition of resin acid or other heterogeneous catalyst to catalyze olefins added to previously etherified bio-oil.

The drawbacks of the prior art solutions are that the FPBO needs to be supplemented with additives and/or the storage time of the FPBO is limited due to aging reactions of the FPBO. The inventors have thus recognized the need for a method for treating FPBO that allows the FPBO to be stored without loss of its usability, and that is economic and feasible for large-scale production of FPBO.

### PURPOSE

The purpose of the current disclosure is to provide a new type of method for controlled aging of fast pyrolysis bio-oil. The purpose of the current disclosure is further to alleviate at least one of the problems related to prior-art solutions.

### SUMMARY

The method according to the current disclosure is characterized by what is presented in claim 1.

The aged fast pyrolysis bio-oil according to the current disclosure is characterized by what is presented in claim 10.

The plant according to the current disclosure is characterized by what is presented in claim 11.

### BRIEF DESCRIPTION OF THE DRAWINGS

The accompanying drawings, which are included to provide a further understanding of the current disclosure and constitute a part of this specification, illustrate embodiments of the disclosure and together with the description help to explain the principles of the current disclosure. In the drawings:
Fig. 1 is a flow chart illustration of one embodiment of the method according to the present disclosure.
Fig. 2. is a schematic presentation of the plant according to the present disclosure.
Figure 3 is a schematic presentation of another embodiment of a plant according to the present disclosure.
Figure 4 is a schematic presentation of another embodiment of a plant according to the present disclosure.

### DETAILED DESCRIPTION

Fast pyrolysis bio-oil (FPBO) derived from lignocellulosic biomass is a mixture of at least hundreds of different molecules containing different functional groups, many of which contain oxygen. The functional groups in the FPBO may react with each other, leading to changes in oil composition and chemical properties. The reactivity of the compounds varies from extremely reactive single electron radical-containing compounds to relatively stable ones. The inventors of the current disclosure surprisingly found out that it is possible to modulate the aging reactions of FPBO without adding compounds, such as alcohols or oxidants, into the FPBO. Instead, if the aging reactions are controlled by regulating the temperature at which the reactions take place, or if the FPBO is passed over a suitable catalyst, aged FPBO can be obtained whose usability is retained.

In the context of the current disclosure, usability of FPBO means that only such a limited number of aging reactions take place in the FPBO that the reactions do not raise the temperature of the FPBO above a threshold value if the aged FPBO is kept at adiabatic or near-adiabatic conditions. By a threshold value is herein meant a temperature above which the aging reactions start to accelerate leading to deterioration of the FPBO. The threshold value can be, for example, the condensing temperature. The threshold value can alternatively be the temperature at which the FPBO was held when aged FPBO was produced.

Specific physical properties, for example viscosity, water content or the presence of only one phase, might be advantageous in specific uses of the FPBO. Although these features might display a correlation with the progress of the aging reactions, they are not the directly the focus of the current disclosure.

By fast pyrolysis bio-oil (FPBO) is herein meant FPBO as defined by the REACH Consortium for Fast Pyrolysis Bio-Oil. Thus, by FPBO is meant liquid condensate recovered by thermal treatment of lignocellulosic biomass, at short hot vapor residence time (typically less than about 10 seconds) typically at between 450-600°C, at near atmospheric pressure or below, in the absence of oxygen. By lignocellulosic biomass is herein meant all types of wood-based biomass, such as wood, for example clean wood, wood chippings and shavings, as well as forest residue. Further, by lignocellulosic biomass is meant different agro-biomasses, such as, straw and husks from different crops, such as cereals, maize, rice and sun flower.

By aging reactions is herein meant the spontaneous reactions taking place in fresh FPBO. By aging of FPBO is herein meant the changes taking place in the FPBO due to the aging reactions. The aging reactions may lead to an increase in the viscosity or to phase separation of the FPBO. The increase in the viscosity is caused by a number of different polymerization reactions that increase the average molecular weight of the FPBO. Without limiting the current disclosure to any specific theory, the aging reactions often involve carbonyl groups present in the FPBO. By aged FPBO is herein meant FPBO, in which such a large proportion of the aging reactions has taken place, that the FPBO can be stored at ambient storage conditions without adverse effects on its usability even under extended periods of time, for example for a year. Further, the aged FPBO is safe for storage, transport and use. The aged FPBO produced by the method according to the present disclosure is more stable even if the temperature of the FPBO raises back to the aging temperature due to external factors after the aged FPBO has been released from the aging process.
It is to be understood that the degree of aging necessary for the FPBO to be termed aged, depends on the specifics of the use of the FPBO, especially on how long and under what kinds of conditions it will be stored. Further, if the aged FPBO is heated above the threshold temperature, new aging reactions might be started or the ones already present might be accelerated.

In one aspect, a method for controlled aging of fast pyrolysis bio-oil is disclosed. The method is characterized in that it comprises modulation of the aging reactions of the fast pyrolysis bio-oil for retaining the usability of the fast pyrolysis bio-oil, by subjecting the fast pyrolysis bio-oil to temperature regulation and/or to a catalytic treatment for a predetermined time, for producing aged fast pyrolysis bio-oil. In one embodiment, the method is characterized in that it comprises modulation of the aging reactions of the fast pyrolysis bio-oil for retaining the usability of the fast pyrolysis bio-oil, by subjecting the fast pyrolysis bio-oil to temperature regulation for a predetermined time, for producing aged fast pyrolysis bio-oil. In one embodiment, the method is characterized in that it comprises modulation of the aging reactions of the fast pyrolysis bio-oil for retaining the usability of the fast pyrolysis bio-oil, by subjecting the fast pyrolysis bio-oil to a catalytic treatment for a predetermined time.

In other words, the FPBO is subjected to conditions that lead to aging reactions taking place, but not to such an extent and/or through such routes that would make the aged FPBO unusable. Without limiting the current disclosure to any specific theory, the conditions might favor reactions consuming reactive groups present in the FPBO but suppress and/or avoid the most harmful of the aging reactions.

By temperature regulation is herein meant controlling the temperature of the FPBO so that it remains within a desired range. The temperature regulation can comprise heating. Alternatively, the temperature regulation can comprise cooling. As the conditions during the aging may vary, the FPBO might be first cooled and heated later, or *vice versa,* during aging.

When FPBO is produced, the non-condensable gas fraction is often burned. The heat generated during the burning can be utilized in the temperature regulation of the aging. Further, it is not always possible to perform the method according to the present disclosure directly after producing the fresh FPBO. When it is not possible to perform the aging process immediately, the fresh FPBO can be stored before the aging is performed. In this case, attention should be paid into preserving the properties of the FPBO so, that the spontaneous aging reactions do not render the FPBO unusable. The fresh FPBO might be cooled, for example. This in turn is expensive, especially on an industrial scale and therefore, performing the aging without delay after production is beneficial.

If the FPBO is treated catalytically, the FPBO is exposed to a catalyst having a similar effect as the temperature regulation. For example, the catalyst can be an acid catalyst or a basic catalyst. This can be done through heterogenous catalysis, for example using a solid catalyst bed, over which the FPBO is passed. Alternatively, the solid catalyst bed can be mixed with the FPBO and removed through phase separation. Temperature of the catalytic treatment may be modified to optimize the performance of the catalyst, the used temperature depending on the specific catalyst selected.

The FPBO is recovered from the pyrolysis reactor by condensing through methods that are known to the skilled person. By condensing temperature is herein meant the temperature at which the condensing is performed. The condensing temperature is typically 35-60 °C, for example 50 °C. The condensing temperature affects the properties of the FPBO. At lower condensing temperatures, the FPBO yield increases, but also the water content of the FPBO rises. Also the proportion of the so-called easily-vaporizable compounds in the FPBO increases. This might lead to lower stability of the FPBO and/or higher losses during the storage and transport of the FPBO. Without limiting the current invention to any specific theory, these compounds might be especially reactive, contributing to the aging reactions. They might also increase the lability of the FPBO, since they might become vaporized also during storage of the FPBO, thus being a potential safety hazard.

In one embodiment, the modulation comprises temperature regulation and the temperature regulation comprises keeping the temperature of the fast pyrolysis bio-oil at the condensing temperature, or at a temperature that is within 15 °C below or above the condensing temperature, for a predetermined time.

In one embodiment, the modulation comprises temperature regulation and the temperature regulation comprises keeping the temperature of the fast pyrolysis bio-oil at the condensing temperature, for a predetermined time. In one embodiment, the modulation comprises temperature regulation and the temperature regulation comprises keeping the temperature of the fast pyrolysis bio-oil at a temperature that is within 15 °C below or above the condensing temperature, for a predetermined time.

In this embodiment, the condensing temperature is selected as is known in the art, by paying attention to such parameters, as the feedstock, the intended use and the storage time of the FPBO. The temperature is regulated to be within 15 °C of the selected condensing temperature. It is possible to implement the invention by regulating the temperature during aging to be within 5 °C of the selected condensing temperature. It is possible to implement the invention by regulating the temperature during aging to be within 3 °C of the selected condensing temperature. Further, the temperature regulation can be embodied by keeping the temperature of the fast pyrolysis bio-oil at the condensing temperature. One example of realizing the method according to the present disclosure is to keep the fast pyrolysis bio-oil in the condensing temperature. The condensing temperature can be, for example, 30 °C, 40 °C, 50 °C or 60 °C.

Further, in a potential embodiment, the modulation comprises temperature regulation and the temperature regulation comprises keeping the temperature of the fast pyrolysis bio-oil at the condensing temperature, or at a temperature that is within 10 °C below or above the condensing temperature, for a predetermined time.

The time for which the temperature regulation is applied, depends on many factors, which may be determined by the skilled person. By predetermined time is herein meant the time that the temperature regulation is applied until the FPBO has been aged enough to become aged FPBO. The time needed for obtaining aged FPBO depends on, for example, the temperature at which the FPBO is aged. When the temperature during the temperature regulation is 40 °C, the predetermined time may be, for example at least 20 hours, 25 hours or two days. When the temperature during the temperature regulation is 35 °C, the predetermined time is longer, for example at least 30 hours, 45 hours or approximately three days. Conversely, when the temperature during the temperature regulation is 50 °C, the predetermined time is shorter, for example at least 12 hours, 18 hours or approximately 24 hours.

To summarize, the determination of how long the FPBO is to be aged, i.e. kept under temperature regulation, is an empirical matter. Such a determination belongs to the knowledge of the skilled person. For industrial scale, the time needed to produce aged FPBO is determined for each application by following the properties of the FPBO that are indicative of its aging. Thereafter, the process may be automated and the properties of the aged FPBO followed during quality control.

Embodiments can be envisaged in which the FPBO is condensed at a relatively high temperature, for example at 80 °C, and then cooled to an aging temperature. In such embodiments, the aging temperature may be, for example 30 °C or 40 °C lower than the condensing temperature.

There might be embodiments, in which FPBO is produced in parallel pyrolysis reactors and condensers, and the FPBO of different sources is combined after condensing. For example in such situations, it might not be possible to adjust the aging conditions based on the specific condensing temperature of each condenser. The method according to the present disclosure is executable by keeping the temperature of the FPBO at 30-65 °C, for example at 40 °C or at 55 °C. In such a situation, the aging temperature might not be optimal for at least some of the FPBO. However, such an arrangement might offer benefits in the overall process set-up and control. In one embodiment, the modulation comprises temperature regulation and the temperature regulation comprises keeping the temperature of the fast pyrolysis bio-oil at 30-65 °C for a predetermined time. It is possible to embody the method by keeping the temperature of the fast pyrolysis bio-oil at 40-60 °C for a predetermined time. Further, it is possible to embody the method by keeping the temperature of the fast pyrolysis bio-oil at 45-50 °C for a predetermined time. The temperature regulation can alternatively comprise keeping the temperature of the fast pyrolysis bio-oil at 40 °C or at 55 °C for a predetermined time.

Also in this embodiment, the predetermined time depends on the temperature, the properties of the FPBO and its intended use, and is determinable empirically by the skilled person.

In addition to changes in viscosity and potential phase separation, the aging reactions of the FPBO release heat. Without limiting the current disclosure to any specific theory, reactions which might release heat during the aging of FPBO include, but are not limited to, dehydration of sugars, polymerization of sugars, lignin degradation products, phenols, carbonyl compounds and multifunctional compounds (such as furans and pyrans) and various oxidation reactions. The amount of released heat is small and detectable only when a number of conditions are met.

Therefore, the heat release phenomenon, here termed internal heat release of the aging reactions, has remained uninvestigated. It is not detectable in small-scale laboratory environment and in pilot-scale investigations, attention is typically paid at other FPBO parameters. Further, in pilot scale, environmental factors might affect the FPBO temperature more than the internal heat release of the aging reactions. Without limiting the current disclosure to any specific theory, the internal heat release of the aging reactions can increase the temperature of the FPBO by tens of degrees in large FPBO volumes. By a large FPBO volume is herein meant a volume of at least 50 m³.

The aging reactions within the FPBO are temperature-dependent, although the degree of temperature dependency varies from reaction to reaction. Without limiting the current disclosure to any specific theory, not only the rate of the aging reactions is likely to increase with increasing temperature, but also the total amount of reactions taking place might increase. In other words, when the temperature is increased, the reaction threshold for new reactions is exceeded and the total number of reactions taking place increases.

Since many functional groups in variable molecular environments contribute to the aging reactions, predicting the reactions and their effects on the FPBO properties is currently impossible. If the temperature of large FPBO volumes is not regulated, the internal heat release of the aging reactions may result in uncontrolled acceleration of the aging reactions. This might include the progression of those reactions that lead to the degradation of the FPBO quality. In other words, if the temperature of large FPBO volumes is not regulated, the FPBO might spontaneously deteriorate.

The properties of FPBO produced from a given feedstock are relatively constant. The exact rate and routes of the aging reactions thus depend on the feedstock. However, generally, the internal heat release of the aging reactions is a universal phenomenon and it is detectable in all types of FPBO, when the scale of FPBO production is large enough.

Therefore, to reach the desired temperature range for the controlled aging of the FPBO according to the present disclosure, it might be beneficial to cool the FPBO during aging. Depending on the volume and the conditions at which the FPBO is stored, the internal heat release of the aging reactions might warm the FPBO, but additional heating is required to reach the target temperature for the controlled aging according to the present disclosure. Therefore, the FPBO might be heated.

As the aging reactions progress, the internal heat release of the aging reactions diminishes. Therefore, the power of cooling or heating necessary to reach the temperature at which the FPBO is to be aged, changes during the predetermined time for which the FPBO is aged. In the method according to the present disclosure, the temperature of the aging FPBO is monitored and the cooling or heating power is adjusted accordingly to keep the temperature at the target value.

In one embodiment, the modulation comprises temperature regulation and the temperature regulation comprises cooling of the fast pyrolysis bio-oil for maintaining a predetermined temperature, or the temperature regulation comprises heating the fast pyrolysis bio-oil for maintaining a predetermined temperature. In one embodiment, the modulation comprises temperature regulation and the temperature regulation comprises cooling of the fast pyrolysis bio-oil for maintaining a predetermined temperature.

In one embodiment, the modulation comprises temperature regulation and the temperature regulation comprises heating the fast pyrolysis bio-oil for maintaining a predetermined temperature.

In addition to the chemical characteristics of the compounds in the FPBO, also the homogeneity of the FPBO affects the rate at which the aging reactions take place. For example, if the FPBO separates into two or more phases, the reactions might be limited by the lack of physical interaction between two potentially reacting molecules. Without limiting the current disclosure to any specific theory, if the FPBO is mixed, this might enhance the aging reactions in the FPBO by retaining the homogeneity of the FPBO. Further, mixing might contribute to the temperature regulation in the tank. Mixing might be used for warming the FPBO. Without limiting the current disclosure to any specific theory, the warming might be caused by the friction of the mixing. However, mixing might increase the rate of heat transfer away from the FPBO. In such a situation, mixing could be used for cooling the FPBO. In other words, mixing can enhance the aging reactions by enabling the occurrence of reactions that would otherwise not take place and/or it can accelerate the reactions under certain conditions. In one embodiment, the modulation comprises mixing for further enhancing the aging reactions of the fast pyrolysis bio-oil.

Mixing may be achieved in many different ways obvious for the skilled person. An impeller can rotate the FPBO, for example. Alternatively, currents can be induced in the FPBO through circulating the FPBO through pumps.

The production of FPBO is a continuous process and the aging reactions start taking place immediately after the FPBO has been condensed. In order to produce FPBO of consistent quality, it might be beneficial to collect the FPBO into a modulation container for batch-wise aging. The feeding of the FPBO into the container can be stopped at a given point in time and the aging calculated to begin from that point. After the FPBO has been subjected to temperature regulation and/or to a catalytic treatment for producing aged fast pyrolysis bio-oil, the FPBO can be released from the modulation tank and conducted further.

In one embodiment, the modulation comprises collecting the fast pyrolysis bio-oil to a modulation container for batch-wise modulation.

The method according to the present disclosure can be implemented during the storage or transport of the FPBO. A dedicated modulation container can be used for aging in both of these alternatives. The modulation container can be any type of a vessel usable for holding the FPBO and amenable to temperature regulation or catalytic treatment of the FPBO. The container may be a tank. A modulation container, in the meaning of this disclosure, can be a pipe system or a combination of pipes and tanks. Multiple modulation containers can be connected to one supply of fresh FPBO. By a supply of fresh FPBO is herein meant one or more pyrolysis reactors. The modulation containers can be connected to the FPBO supply in parallel, so that each of them is filled to a predetermined degree in turn, and then the next one is filled to a predetermined degree. After the FPBO is aged in a given modulation container, the FPBO is released and the modulation container is optionally refilled. Alternatively, the modulation containers can be connected to the FPBO supply in sequence, so that the first modulation container is filled, the time of the last FPBO addition is recorded, the FPBO is aged for some time, and then released to a second modulation container. The time of the last FPBO addition to the second modulation container is recorded and the process is optionally repeated. Such an arrangement offers the benefit that the properties of the FPBO moving from one modulation container to the next may be monitored. It is also possible to combine the temperature modulation and the catalytic modulation so, that one or more modulation containers utilize catalytic modulation, and one or more modulation tanks utilize temperature regulation.

In one embodiment, the volume of the modulation container is at least 50 m³, or the volume of the modulation container is at least 100 m³. In one embodiment, the volume of the modulation container is at least 50 m³. In one embodiment, the volume of the modulation container is at least 100 m³. Without limiting the current disclosure to any specific theory, when the volume of the FPBO increases, the relative surface area of the storage vessel, and thus the area available for heat exchange with the environment, might decrease. This, together with, for example, the degree of thermal isolation of the storage vessel and ambient temperature may produce conditions in which the aging reactions lead to heating of the FPBO.

The method according to the present disclosure is especially well suited for the treatment of large volumes, for example above 50 m³, of FPBO, since in these quantities, the heat generated in the FPBO can be utilized for reaching and/or holding a suitable temperature. In applications involving volumes larger than 50 m³, the temperature regulation often comprises cooling. In applications where the modulation container is co-located with the pyrolysis process, the heat captured from the aging reactions of the FPBO can be redirected and used in the pyrolysis process, for example for drying the biomass. Embodiments can be envisaged in which the heat generated by the aging reactions is captured and utilized. The utilization may comprise, for example, drying lignocellulosic biomass used for pyrolysis.

In one aspect, aged fast pyrolysis bio-oil obtainable by the method according to any of the preceding claims is disclosed.

The properties of the aged FPBO can be measured in a number of different ways. However, in practice, the most important feature of the aged FPBO is that such a large proportion of the aging reactions has taken place, that the FPBO can be stored at ambient storage conditions without adverse effects on its usability even under extended periods of time. This also means that the aged FPBO is safe for transport and storage outside dedicated facilities. The FPBO will not undergo spontaneous reactions, or will only do so slowly enough, thus avoiding the deterioration of the FPBO, and/or the FPBO causing environmental risks or safety hazards due to the heat generated by the aging reactions.

In one embodiment, the aged fast pyrolysis bio-oil meets at least one of the following conditions:
- the thermal power of the aged fast pyrolysis bio-oil is less than 0.1 W kg⁻¹, or less than 0.05 W kg⁻¹, measured at 50 °C;
- the carbonyl group content of the aged fast pyrolysis bio-oil is less than 4 mol kg⁻¹, or less than 3.5 mol kg⁻¹;
- the adiabatic temperature rise of the aged fast pyrolysis bio-oil over infinite time, measured at 50 °C, is 60 % or less of the adiabatic temperature rise of freshly produced fast pyrolysis bio-oil over infinite time;
- the fast pyrolysis bio-oil is modulated by temperature regulation at a temperature of 40 °C for at least 60 hours, or at a temperature of 50 °C for at least 31 hours, or at a temperature of 60 °C for at least 16 hours.

In one embodiment, the thermal power of the aged fast pyrolysis bio-oil is less than 0.1 W kg⁻¹, or less than 0.05 W kg⁻¹, measured at 50 °C. In one embodiment, the carbonyl group content of the aged fast pyrolysis bio-oil is less than 4 mol kg⁻¹, or less than 3.5 mol kg⁻¹. In one embodiment, the adiabatic temperature rise of the aged fast pyrolysis bio-oil over infinite time, measured at 50 °C, is 60 % or less of the adiabatic temperature rise of freshly produced fast pyrolysis bio-oil over infinite time. In one embodiment, the fast pyrolysis bio-oil is modulated by temperature regulation at a temperature of 40 °C for at least 60 hours, or at a temperature of 50 °C for at least 31 hours, or at a temperature of 60 °C for at least 16 hours.

By adiabatic temperature rise over infinite time is herein meant the temperature by which the aging reactions could increase the temperature of the FPBO if the FPBO would be kept in a completely isolated vessel. Since the aging reaction take place over a long time and slow down the further the reactions have progressed, it is not possible to monitor them completely. In other words, the heat release measured over any defined time reveals only a part of the reactions, whose rate is changing during the measurement interval. The adiabatic temperature rise over infinite time is therefore an extrapolation of the measured heat release over infinite time by using a mathematical model. Further, due to the temperature dependency of the aging reactions, the adiabatic temperature release can only be given for a specific temperature. In 50 °C, the adiabatic temperature rise over infinite time for the freshly produced FPBO is approximately 50-75 °C. By freshly produced FPBO is herein meant FPBO immediately after condensing.

In order to measure the adiabatic heat release of the FPBO over infinite time and the thermal power of the FPBO, the FPBO is placed in a thermally insulating container. The thermally insulating container is kept in a controlled temperature environment and the temperature profile of the FPBO is measured over a period of time, for example 1-3 weeks. The thermally insulating container is then moved to a different temperature and the temperature profile of the FPBO is measured over time to elucidate the heat transfer between the thermally insulating container and the environment. Based on these measurements, the adiabatic temperature release over infinite time can be calculated. The method is disclosed in more detail in patent application FI 20146165.

If it is possible to measure the adiabatic temperature release over infinite time for the freshly produced FPBO, measuring the corresponding adiabatic temperature release of the aged FPBO will give a relative value for the parameter. This can be, for example 50 % or less. The adiabatic temperature release over infinite time for the aged FPBO can alternatively be 40 % of the original value or less.

In case the original value for the adiabatic temperature release over infinite time for the freshly produced FPBO is not available, the value can still be measured for the aged FPBO. In one embodiment, the adiabatic temperature rise of the aged fast pyrolysis bio-oil over infinite time, measured at 50 °C, is 35 °C or less, or the adiabatic temperature rise of the aged fast pyrolysis bio-oil over infinite time, measured at 50 °C, is 25 °C or less. In one embodiment, the adiabatic temperature rise of the aged fast pyrolysis bio-oil over infinite time, measured at 50 °C, is 35 °C or less. In one embodiment, the adiabatic temperature rise of the aged fast pyrolysis bio-oil over infinite time, measured at 50 °C, is 25 °C or less.

Aged FPBO fulfilling such criterion can be considered stable enough to be used in the typical applications for FPBO and to remain relatively unaltered even during prolonged storage.

An alternative way to measure the aging of the FPBO is to analyze the thermal power of the fast pyrolysis bio-oil at a certain temperature. The thermal power is an indicator of the momentary rate of the heat-releasing reactions in the FPBO. The heat power is proportional to the temperature at which the reactions take place, since the heat released in a time unit is directly proportional to the reaction speed. The reaction speed, again, is usually temperature-dependent. When the thermal power of FPBO is measured over time, a declining curve is obtained. The heat power measured at a given time is proportional to the remaining reactivity to of the FPBO, i.e. to the remaining reactive components in the FPBO.

For the aged FPBO obtainable by the method according to the present disclosure, the thermal power is less than 0.1 W kg⁻¹ measured at 50 °C. Alternatively, the thermal power of the aged FPBO is less than 0.05 W kg⁻¹ measured at 50 °C.

Another parameter that is indicative of the aging of the FPBO is its carbonyl group content. Freshly produced FPBO contains approximately 5 mol carbonyl groups kg⁻¹ FPBO. Since it can be hypothesized that carbonyl groups are involved in a large proportion of the aging reactions of the FPBO, their concentration in the oil is a usable parameter for analyzing the progress of the aging reactions. The analysis of the carbonyl groups is an acid-base titration method with hydroxyl amine hydrochloride pre-treatment and a person skilled in the art is knowledgeable on how to perform such an analysis.

The aged FPBO according to the current disclosure contains less than 4 mol kg⁻¹ carbonyl groups. Alternatively, the aged FPBO contains less than 3.5 mol kg⁻¹ carbonyl groups. Alternatively, the aged FPBO according to the current contains less than 3 mol kg⁻¹ carbonyl groups.

When the FPBO is modulated by temperature regulation at a temperature of 30-65 °C for at least 48 hours, or for at least 72 hours, the aged FPBO according to the present disclosure is obtained.

Fast pyrolysis bio-oil (FPBO) according to the present disclosure is produced as is known in the art. A plant in which FPBO is produced contains at least a reactor for vaporizing pyrolyzable components from biomass and a condenser for condensing the FPBO. In the case of the current disclosure, the biomass is lignocellulosic biomass. The plant additionally contains a number of devices related to, for example, drying of the biomass to be pyrolyzed, capturing energy from non-condensable components of the pyrolysis vapor, as well as process regulation and safety equipment. These devices are necessary for the operation of the plant, but they are not described herein, because their design is known to the skilled person.

The plant according to the present disclosure is characterized in that it comprises equipment for carrying out the method according to the present disclosure. The plant therefore comprises modulation means that allows subjecting the fast pyrolysis bio-oil to temperature regulation and/or to a catalytic treatment, for producing aged fast pyrolysis bio-oil.

The FPBO that is subjected to the modulation of the aging reactions is typically freshly produced FPBO. However, due to reasons relating to, for example, process control, it might be that the FPBO has been stored for some time before it is subjected to temperature control and/or catalytic treatment according to the present disclosure. The production of FPBO and its aging can be performed in one facility, or the facilities for the production and aging can be separated. The separation can be temporal or spatial. Temporal separation of the two process means that, even if the FPBO is produced and aged in a single facility, the FPBO can be produced during the time that the aging reactions are not performed. Spatial separation is to be understood as a physical distance between the two processes. The distance can vary, as can the transport method between the two locations.

In one aspect, a plant for producing aged fast pyrolysis bio-oil is disclosed. The plant is characterized in that it comprises
- modulation means for modulation of the aging reactions of the fast pyrolysis bio-oil for retaining the usability of the fast pyrolysis bio-oil, by subjecting the fast pyrolysis bio-oil to temperature regulation and/or to a catalytic treatment, for producing aged fast pyrolysis bio-oil.

In one embodiment, the plant further comprises
- a fast pyrolysis reactor for vaporizing pyrolyzable components from lignocellulosic biomass; and
- a condenser for condensing vaporized fast pyrolysis bio-oil from the fast pyrolysis reactor.

The plant according to the present disclosure can be used for controlled aging of FPBO either as a continuous process or as a batch-wise process.

In one embodiment, the modulation means for modulation of the aging reactions of the fast pyrolysis bio-oil comprises
- a modulation container for performing the modulation of fast pyrolysis bio-oil;
- a temperature monitoring system arranged to monitor the temperature of the fast pyrolysis bio-oil in the modulation container; and
- a temperature regulation unit arranged to receive temperature information from the temperature monitoring system, and to regulate the temperature of the fast pyrolysis bio-oil in the modulation container.

The modulation container comprises all the arrangements for regulating the flow of FPBO, the details of which are known to the skilled person. If the modulation container is a tank, it typically comprises a mixing unit constructed as is known in the art for mixing FPBO comprising. A mixing unit comprises an impeller for agitating the FPBO, a motor for rotating the impeller and a shaft connecting the impeller and the motor. If the modulation container comprises piping, the FPBO typically moves by flow created by pumps, many types of which are known in the art.

The size of the modulation container can vary. In many advantageous applications, the size of the modulation container is at least 50 m³. In many advantageous applications, the size of the modulation container is at least 100 m³. By the size of the modulation container is herein meant the volume of the modulation container available for the FPBO to be aged. The size of the modulation container sets the upper limit for the volume of FPBO to be aged simultaneously. However, it is not necessary to fill the modulation container completely and also a partly filled modulation container can be used for performing the method according to the present disclosure. In one embodiment, the volume of the modulation container is at least 50 m³, or the volume of the modulation container is at least 100 m³.

In one embodiment, a storage tank for fast pyrolysis bio-oil is used as the modulation container. A modulation container can be a container specifically constructed for performing the method according to the present disclosure. Alternatively, it is possible that storage tanks known in the art are equipped with an arrangement for carrying out the current method for controlled aging of the FPBO. The method can be implemented also during the transport of the FPBO. For example, tanks for FPBO on a tanker can be equipped for carrying out the method according to the present disclosure.

The temperature monitoring system comprises at least a sensor for sensing the temperature of the FPBO to be aged and a signal receiving and output unit for mediating the temperature information received from the sensor. The temperature monitoring system may sense the temperature of the FPBO within the modulation container. Alternatively, the temperature can be sensed outside the modulation container, for example in an external circulation loop for the FPBO.

The temperature regulation unit comprises a device for heating and/or cooling the FPBO, such as one or more heat exchangers. It further comprises means for receiving temperature information from the temperature monitoring system and adjusting the function of the device for heating and/or cooling the FPBO accordingly. In other words, if, according to the temperature information from the temperature monitoring system, the temperature of the FPBO is higher than a predetermined set value, the device for heating and/or cooling the FPBO will begin to cool the FPBO. If the FPBO is already being cooled, the cooling power will be increased in response to such temperature information. Conversely, if the temperature of the FPBO is lower than a predetermined set value, the device for heating and/or cooling the FPBO will begin to heat the FPBO. If the FPBO is already heated, the heating power will be increased in response to such temperature information. By a predetermined set value is herein meant a value, or a range of values, that are deemed appropriate for the controlled aging of the FPBO in the specific application. This evaluation is performed by the skilled person.

Above, only the basic principle of the temperature regulation is described and many alternatives remain available for the skilled person to adjust or fine-tune the temperature regulation of the FPBO. For example, the magnitude of the temperature difference between the predetermined set value can be calculated and the intensity of heating or cooling can be adjusted based on the said magnitude. In response to a temperature above or below the set value, the heating or cooling, respectively, can be stopped or the opposite process can be initiated immediately. Further, the interval of temperature measurement can be varied according to specific conditions etc.

In one embodiment, the temperature regulation unit comprises a heat exchanger inside the modulation container; or the temperature regulation unit comprises a heat exchanger outside the modulation container. In one embodiment, the temperature regulation unit comprises a heat exchanger inside the modulation container. In one embodiment, the temperature regulation unit comprises a heat exchanger outside the modulation container. The temperature regulation unit can be constructed to be at least partly external to the modulation container. The temperature regulation unit may comprise a heat exchanger inside the modulation container. Alternatively, the temperature regulation unit may comprise a heat exchanger outside the modulation container.

In both cases, the heat exchanger is connected to suitable means for providing the heating or cooling energy. For example heating or cooling fluid can be conducted to the heat exchanger through pipes. If the heat exchanger(s) is inside the modulation container, many design options are available for constructing sufficient heat-exchange capacity. The heat exchange surfaces can be constructed along walls of the modulation container, for example.

If the heat exchanger(s) is outside the modulation container, an external FPBO circulation system is needed to circulate the FPBO through the heat exchanger (s). In addition to the piping for circulating the FPBO, a pump and an adjustment system comprising valves, as well as other devices known to the skilled person is designed into the FPBO circulation system in such a case.

Embodiments can be envisaged in which the temperature monitoring system and the temperature regulation unit are constructed as a single arrangement. Although some functions of the temperature monitoring system and the temperature regulation unit might be combined to a single device in such an embodiment, such an arrangement still falls within the scope of this disclosure.

In one embodiment, the modulation container comprises a wall and the temperature regulation unit comprises a heat-exchange element in thermal connection with the wall, or the temperature regulation unit is integrated with the wall. In one embodiment, the modulation container comprises a wall and the temperature regulation unit comprises a heat-exchange element in thermal connection with the wall. In one embodiment, the modulation container comprises a wall and the temperature regulation unit is integrated with the wall.

The heat exchange element can be in thermal connection with the wall of the modulation container through a part of the wall. It is possible to construct the heat exchange element to completely surround the wall of modulation container.

Alternatively, the temperature regulation unit can be integrated with the wall. This means that there is no separate heat exchange element, but the wall of the modulation container is designed so that it can mediate the heat exchange. In this case, the wall of the modulation container is cooled and/or heated directly.

The heating and/or cooling can be brought about by, for example, heat exchange elements, such as heat exchange plates or gas or fluid circulation. In some applications, the gas or fluid circulation can be arranged inside the wall of the modulation container. In some applications, the gas or fluid circulation can be arranged on the outer surface of the wall of the modulation container.

A further possible embodiment of the temperature regulation unit is that the device for heating or cooling the FPBO would comprise adaptable thermal isolation of the modulation container. This embodiment would be especially suited to plants in which the FPBO volume is so large that the internal heat release of the aging reactions is sufficient to provide heat for the controlling the aging reactions. In such an embodiment, if the temperature information from the temperature monitoring system indicates that the temperature of the FPBO is higher than a predetermined set value, the thermal isolation of the modulation container would be reduced. Conversely, if the temperature information from the temperature monitoring system indicates that the temperature of the FPBO is lower than a predetermined set value, the thermal isolation of the modulation container would be increased.

The reduction or increase of the thermal isolation can be brought about automatically, for example by motor-operated thermal isolation panels. Alternatively, evaporation from the tank surface can be used for cooling a modulation container.

It would alternatively be possible to construct an embodiment, wherein the aging reactions of the FPBO are modulated through a catalyst. In such an embodiment, the modulation means for modulating fast pyrolysis bio-oil comprises
a modulation container for performing the modulation of fast pyrolysis bio-oil;
a catalyst, arranged as a catalyst bed or a catalyst surface for catalyzing aging reactions of FPBO arranged to be in fluid communication with the FPBO. Such an embodiment could optionally contain also
a temperature monitoring system arranged to monitor the temperature of the fast pyrolysis bio-oil in the modulation container; and
a temperature regulation unit arranged to receive temperature information from the temperature monitoring system, and regulating the temperature of the fast pyrolysis bio-oil in the modulation container

In one embodiment, the modulation means for modulation of the aging reactions of the fast pyrolysis bio-oil comprises a catalyst arranged to be in fluid communication with the fast pyrolysis bio-oil.

The catalyst could be organized in an external circulation loop. Such an alternative would allow the easy maintenance, replacement and/or regeneration of the catalyst bed or surface. Alternatively, the catalyst can be placed within the modulation container either as surfaces or in the form of particles separable from the FPBO. If the catalyst is placed within the modulation container as particles, the FPBO is typically mixed to agitate the particles and allow the efficient interaction of the FPBO components and the catalyst.

If the modulation of the aging reactions is performed through catalysis, temperature regulation can be combined with it to further optimize the progress of the aging reactions.

In addition to the features described above, the plant according to the present disclosure can comprise means for recording the residence time of the FPBO in the modulation container. This information can be used for automatically releasing the aged FPBO from the modulation container after a predetermined residence time has been achieved. The aged FPBO can be released to further processing or to a storage facility.

The embodiments described hereinbefore may be used in any combination with each other. Several of the embodiments may be combined together to form a further embodiment. A method or a plant, to which the disclosure is related, may comprise at least one of the embodiments described hereinbefore.

An advantage of the method according to the present disclosure is that fast pyrolysis bio-oil (FPBO) that is stable enough for storage, transport and use can be produced without adding substances, such as alcohols or other additives into the FPBO.

Another advantage is that the aging reactions in the FPBO are allowed to take place in a controlled manner, so that the reactive functional groups are sufficiently exhausted but the usability of the FPBO is retained. The FPBO is stable even if the temperature of the FPBO raises due to external factors after the FPBO has been released from the aging process.

Yet another advantage is that the method according to the present disclosure is especially suited to industrial-scale production of FPBO, since the need for additives is eliminated, thus saving costs, and since the heat produced by the aging reactions is captured for driving the reactions. It is possible to use the heat produced by the aging reactions also for other process steps where heat is needed. These process steps may be co-localized with the aging process.

A further advantage of the method according to the present disclosure is that the aged FPBO produced by the method does not spontaneously heat even when large volumes of the FPBO are stored.

An advantage of the plant according to the present disclosure is that aged FPBO can be produced in a large scale.

### EXAMPLES

Reference will now be made in detail to the embodiments of the present disclosure, an example of which is illustrated in the accompanying drawing.

The description below discloses some embodiments in such a detail that a person skilled in the art is able to utilize the method and the plant based on the disclosure. Not all steps of the embodiments are discussed in detail, as many of the steps will be obvious for the person skilled in the art based on this specification.

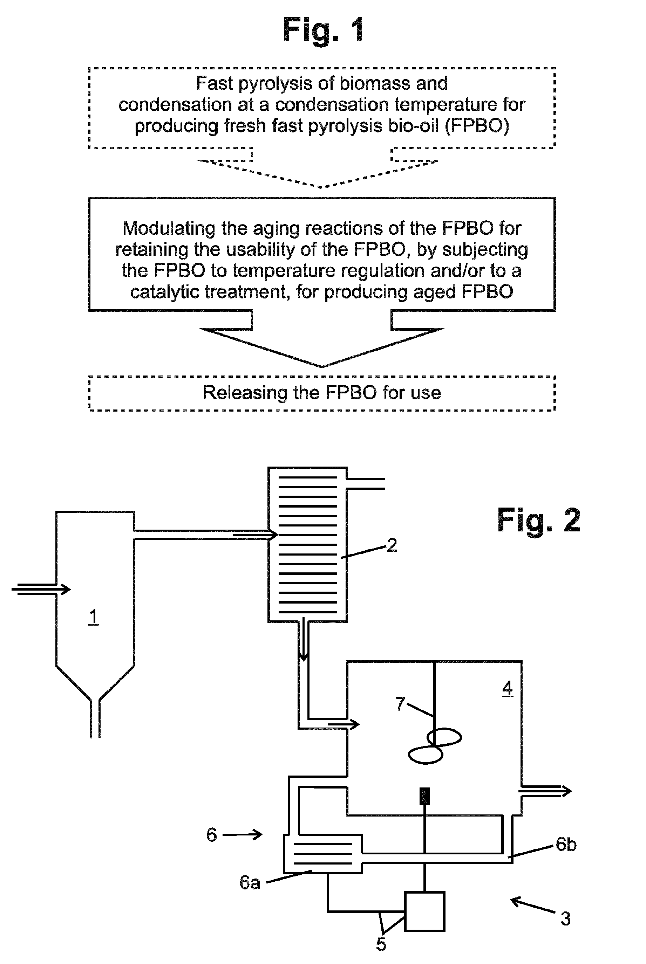

Figure 1 illustrates a method according to one embodiment for producing aged fast pyrolysis bio-oil (FPBO) according to the present disclosure.

In the method of Fig. 1, the steps preceding and following the method according to the present disclosure are depicted with a dashed outline. In the method, the aging reactions of the FPBO are modulated for retaining the usability of the FPBO, by subjecting the FPBO to temperature regulation and/or to a catalytic treatment, for producing aged FPBO.

Figure 2 is a schematic presentation of an embodiment of a plant according to the present disclosure. The components of the plant in Fig. 2 are not drawn to proportion and all components not necessary for describing the features presented in the current disclosure are omitted. The arrows indicate the primary direction of material flow in for the process according to the present disclosure.

In the embodiment of Fig. 2, the plant comprises a pyrolysis reactor 1 and a condenser 2. A mixer 7 for mixing the FPBO is depicted in the modulation container. The plant further comprises modulation means 3. In this embodiment, the modulation means 3 comprises a modulation container 4, a temperature monitoring system 5 and a temperature regulation unit 6. The temperature regulation unit 6 is arranged to comprise a heat exchanger 6a and a FPBO circulation system 6b. The heat exchanger 6a is connected to pipes for circulating heating or cooling fluid, but these pipes, as well as the source of the heating or cooling energy are omitted from the figure for clarity.

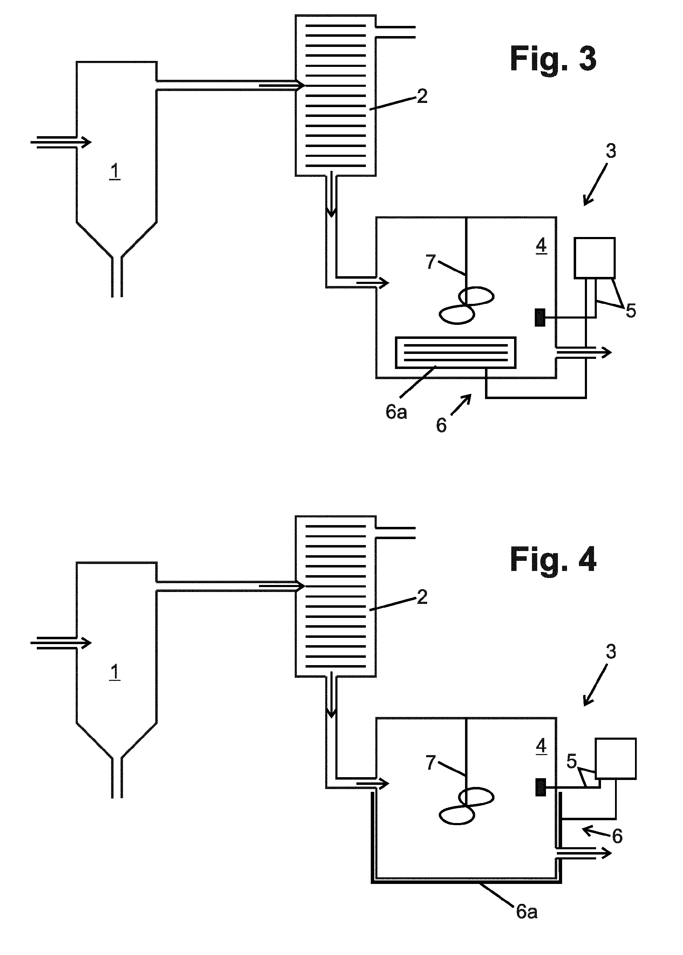

Figure 3 is a schematic presentation of another embodiment of a plant according to the present disclosure. It comprises otherwise the same features as the embodiment of Fig. 2, but the heat exchanger 6a is arranged inside the modulation container 4. Therefore, the FPBO circulation system (6b in Fig. 2) is not present. The piping for heating and/or cooling fluid is omitted also from Fig. 3.

Figure 4 is a schematic presentation of another embodiment of a plant according to the present disclosure. It comprises otherwise the same features as the embodiments of Figs 2 and 3, but the heat exchange between the FPBO and the temperature regulation unit is arranged through the wall of the modulation container 4. In the embodiment of Fig. 4, there is a heat exchange element 6a in thermal connection with the wall. In Fig. 4, the heat exchange element 6a is in thermal connection with the wall of the modulation container 4 through a part of the wall. It would be possible to construct the heat exchange element 6a to completely surround the modulation container 4. Alternatively, the temperature regulation unit 6a could be integrated with the wall. In practice, this could be realized by cooling and/or heating the wall of the modulation container 4 directly. The heating and/or cooling can be brought about by, for example, heat exchange elements, such as heat exchange plates or gas or fluid circulation. In some applications, the gas or fluid circulation can be arranged inside the wall of the modulation container. In some applications, the gas or fluid circulation can be arranged on the outer surface of the wall of the modulation container.

### EXAMPLE - Preparing aged fast pyrolysis bio-oil according to the present disclosure.

Fast pyrolysis bio-oil (FPBO) was produced from wood chips according to methods known in the art. The condensing temperature for the FPBO was 40 °C. The fresh FPBO was aged by regulating its temperature to be 50 °C for 10 days. The chemical properties of the FPBO were analyzed during the treatment and the results are depicted in Table 1.

**Table 1: FPBO properties during aging.**

| | Fresh FPBO | 3 days | 5 days | 7 days | 10 days |
|---|---|---|---|---|---|
| T_{ad}*, °C (dT_{ad}) | 62 | 45 | 41 | 37 | 32 |
| carbonyl content, mol kg⁻¹ | 4.9 | 4.0 | 3.8 | 3.6 | 3.4 |
| thermal power, W kg⁻¹ | 0.560 | 0.094 | 0.070 | 0.060 | 0.051 |

| | | | | | |
|---|---|---|---|---|---|
| *Adiabatic temperature rise over infinite time. | | | | | |

The adiabatic temperature rise over infinite time (T_{ad}) for the fresh FPBO was 62 °C. Within 3 days, the value dropped by 27.4 %, to 45 °C. After five days, T_{ad} had dropped by 33.9 % compared to the initial value, to 41 °C. After seven days, the corresponding drop was 40.3 % (to 37 °C) and after 10 days 48.4 % (to 32 °C).

During the same time period, the carbonyl content of the FPBO dropped from 4.9 mol kg⁻¹ to 3.4 mol kg⁻¹, *i.e*. by 30.6 %. In addition, based on previous results (not shown), it has been demonstrated that the water content of the FPBO increases only by some percentage points during aging. This indicates that the aging reactions release only a relatively small amount of water.

The thermal power of the FPBO dropped from 0.560 W kg⁻¹ to 0.094 W kg⁻¹ (by 83 %) within the first three days of aging. The drop was 59 % already after 1 day (0.229 W kg⁻¹, not shown). After five days of aging, the thermal power had decreased by 88 % (to 0.070 W kg⁻¹) and after seven and ten days by 89 % and 91 %, respectively (to 0.060 W kg⁻¹ and 0.051 W kg⁻¹).

According to the results presented above, it can be deduced that for the above material and in the above conditions, an aging time of 2 to 5 days might be considered suitable.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for controlled aging of fast pyrolysis bio-oil, **characterized in that** the method comprises modulation of the aging reactions of the fast pyrolysis bio-oil for retaining the usability of the fast pyrolysis bio-oil, by subjecting the fast pyrolysis bio-oil to temperature regulation and/or to a catalytic treatment for a predetermined time, for producing aged fast pyrolysis bio-oil.

2. The method according to claim 1, wherein the modulation comprises temperature regulation and the temperature regulation comprises keeping the temperature of the fast pyrolysis bio-oil at the condensing temperature, or at a temperature that is within 15 °C below or above the condensing temperature, for a predetermined time.

3. The method according to claim 1, wherein the modulation comprises temperature regulation and the temperature regulation comprises keeping the temperature of the fast pyrolysis bio-oil at 30-65 °C for a predetermined time.

4. The method according to any of the preceding claims, wherein the modulation comprises temperature regulation and the temperature regulation comprises cooling of the fast pyrolysis bio-oil for maintaining a predetermined temperature, or the temperature regulation comprises heating the fast pyrolysis bio-oil for maintaining a predetermined temperature.

5. The method according to any of the preceding claims, wherein the modulation comprises mixing for further enhancing the aging reactions of the fast pyrolysis bio-oil.

6. The method according to any of the preceding claims, wherein the modulation comprises collecting the fast pyrolysis bio-oil to a modulation container for batch-wise modulation.

7. The method according to claim 6, wherein the volume of the modulation container is at least 50 m³, or the volume of the modulation container is at least 100 m³.

8. Aged fast pyrolysis bio-oil obtainable by the method according to any of the preceding claims.

9. Aged fast pyrolysis bio-oil according to claim 8, wherein the aged fast pyrolysis bio-oil meets at least one of the following conditions:
- the thermal power of the aged fast pyrolysis bio-oil is less than 0.1 W kg⁻¹, or less than 0.05 W kg⁻¹, measured at 50 °C;
- the carbonyl group content of the aged fast pyrolysis bio-oil is less than 4 mol kg⁻¹, or less than 3.5 mol kg⁻¹;
- the adiabatic temperature rise of the aged fast pyrolysis bio-oil over infinite time, measured at 50 °C, is 60 % or less of the adiabatic temperature rise of freshly produced fast pyrolysis bio-oil over infinite time;
- the fast pyrolysis bio-oil is modulated by temperature regulation at a temperature of 40 °C for at least 60 hours, or at a temperature of 50 °C for at least 31 hours, or at a temperature of 60 °C for at least 16 hours.

10. The aged fast pyrolysis bio-oil according to claim 8, wherein the adiabatic temperature rise of the aged fast pyrolysis bio-oil over infinite time, measured at 50 °C, is 35 °C or less, or wherein the adiabatic temperature rise of the aged fast pyrolysis bio-oil over infinite time, measured at 50 °C, is 25 °C or less.

11. A plant for producing aged fast pyrolysis bio-oil, **characterized in that** the plant comprises
- modulation means (3) for modulation of the aging reactions of the fast pyrolysis bio-oil for retaining the usability of the fast pyrolysis bio-oil, by subjecting the fast pyrolysis bio-oil to temperature regulation and/or to a catalytic treatment, for producing aged fast pyrolysis bio-oil.

12. The plant according to claim 11, wherein the plant further comprises
- a fast pyrolysis reactor (1) for vaporizing pyrolyzable components from lignocellulosic biomass; and
- a condenser (2) for condensing vaporized fast pyrolysis bio-oil from the fast pyrolysis reactor;

13. The plant according to claim 11 or 12, wherein the modulation means (3) for modulation of the aging reactions of the fast pyrolysis bio-oil comprises
- a modulation container (4) for performing the modulation of fast pyrolysis bio-oil;
- a temperature monitoring system (5) arranged to monitor the temperature of the fast pyrolysis bio-oil in the modulation container (4); and
- a temperature regulation unit (6) arranged to receive temperature information from the temperature monitoring system, and to regulate the temperature of the fast pyrolysis bio-oil in the modulation container (4).

14. The plant according to claim 13, wherein the volume of the modulation container (4) is at least 50 m³, or the volume of the modulation container (4) is at least 100 m³.

15. The plant according to claim 13 or 14, wherein a storage tank for fast pyrolysis bio-oil is used as the modulation container (4).

16. The plant according to any of claims 13-15, wherein the temperature regulation unit (6) comprises a heat exchanger (6a) inside the modulation container (4); or the temperature regulation unit (6) comprises a heat exchanger (6a) outside the modulation container (4).

17. The plant according to any of claims 13-16, wherein the modulation container comprises a wall and the temperature regulation unit comprises a heat-exchange element (6a) in thermal connection with the wall, or the temperature regulation unit (6a) is integrated with the wall.

18. The plant according to claim 11, wherein the modulation means for modulation of the aging reactions of the fast pyrolysis bio-oil comprises a catalyst arranged to be in fluid communication with the fast pyrolysis bio-oil.
